# FASCICULE DE BREVET EUROPEEN

(11) **EP 3 380 947 B1**
(45) Date de publication et mention de la délivrance du brevet: **19.10.2022**
(21) Numéro de dépôt: 16819129.4
(22) Date de dépôt: 22.11.2016
(51) Int. Cl.: G06F 17/18, G01W 1/10, G01W 1/12

(54) **PROCÉDÉ ET DISPOSITIF DE PRÉVISION DE NÉBULOSITÉ PAR TRAITEMENT STATISTIQUE DE DONNÉES SÉLECTIONNÉES PAR ANALYSE SPATIALE**
VERFAHREN UND VORRICHTUNG ZUR PROGNOSE DER BEWÖLKUNG DURCH STATISTISCHE VERARBEITUNG VON DURCH RÄUMLICHE ANALYSE AUSGEWÄHLTEN DATEN
METHOD AND DEVICE FOR FORECASTING CLOUDINESS BY STATISTICAL PROCESSING OF DATA SELECTED BY SPATIAL ANALYSIS

(30) Priorité: 23.11.2015 FR 1570078
(43) Date de publication de la demande: 03.10.2018
(73) Titulaire: Reuniwatt, 97490 Saint Denis (FR)
(72) Inventeur: CROS, Sylvain, 75019 Paris (FR); DEROUBAIX, Maxime, 59710 Avelin (FR); SCHMUTZ, Nicolas, 97490 Sainte-Clotilde (FR)
(74) Mandataire: Ipside
(86) Numéro de dépôt international: PCT/FR2016/053041
(87) Numéro de publication internationale: WO 2017/089692

(56) Documents cités:
- FR-A1- 3 019 408
- HAMMER A ET AL: "Short-term forecasting of solar radiation: a statistical approach using satellite data", SOLAR ENERGY, vol. 67, no. 1-3, juillet 1999 (1999-07), pages 139-150, XP004222100, ISSN: 0038-092X, DOI: 10.1016/S0038-092X(00)00038-4
- MARQUEZ R ET AL: "Hybrid solar forecasting method uses satellite imaging and ground telemetry as inputs to ANNs", SOLAR ENERGY, vol. 92, juin 2013 (2013-06), pages 176-188, XP055316337, GB ISSN: 0038-092X, DOI: 10.1016/j.solener.2013.02.023
- DAMBREVILLE R ET AL: "Very short term forecasting of the Global Horizontal Irradiance through Helioclim maps", 2014 5TH INTERNATIONAL RENEWABLE ENERGY CONGRESS (IREC), 25-27 MARCH 2014, HAMMAMET, TUNISIA, 24 mars 2013 (2013-03-24), pages 1-6, XP032600988, DOI: 10.1109/IREC.2014.6826905 ISBN: 978-1-4799-2196-6 [extrait le 2014-06-05]
- CROS S ET AL: "Cloud pattern prediction from geostationary meteorological satellite images for solar energy forecasting", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9242, 21 octobre 2014 (2014-10-21), pages 924202-924202, XP060042178, DOI: 10.1117/12.2066853 ISBN: 978-1-62841-730-2
- Cros S et al: "Using satellite data for intraday solar energy forecasts: Benchmarks of two cloud trajectory retrieval techniques", 29th European PV Solar Energy Conference, 22-26 September 2014, Amsterdam, NL, septembre 2014 (2014-09), XP055315405, Extrait de l'Internet: URL:https://www.researchgate.net/profile/S ylvain_Cros/publication/267557178_Using_Sa tellite_Data_for_Intraday_Solar_Energy_For ecasts_Benchmarks_of_Two_Cloud_Trajectory_ Retrieval_Techniques/links/546a21980cf2f5e b1807761b.pdf [extrait le 2016-11-01]
- Cros S et al: "Satellite-based solar irradiance assessment and forecasting in tropical insular areas", Abstract of talk at the 16th EMS Annual Meeting & 11th European Conference on Applied Climatology (ECAC), 12-16 September 2016, Trieste, Italy, septembre 2016 (2016-09), XP055315357, Extrait de l'Internet: URL:http://meetingorganizer.copernicus.org /EMS2016/EMS2016-540.pdf [extrait le 2016-11-01]

## Description

### Domaine technique

La présente invention concerne la prévision de la nébulosité sur un site (PO) par application d'outils statistiques sur des données acquises par satellite et sélectionnées par analyse spatiale.

### État de la technique antérieure

La production d'électricité d'un système de collecte et conversion d'énergie solaire (nommé système de conversion par la suite) est directement liée au rayonnement solaire incident au sol reçu par le système de conversion. L'intérêt de prévoir le rayonnement solaire est d'anticiper la production d'électricité de tels systèmes de conversion. L'anticipation de la production d'électricité génère de nombreux avantages comme l'optimisation de son intégration au réseau électrique lorsque les systèmes de conversion sont raccordés au réseau.

Les variations du rayonnement solaire incident au sol ont trois causes majeures :
- La position du soleil dans le ciel ;
- La composition atmosphérique ;
- La nébulosité.

Les deux premières causes sont estimées avec une très grande prévision à l'aide de modèles physiques et géométriques. L'enjeu majeur dans la prévision du rayonnement solaire est donc de prévoir la nébulosité. En outre, la prévision de la nébulosité a des applications qui dépassent le domaine du rayonnement solaire, puisqu'elle est directement liée à l'épaisseur optique, la transmissivité optique et l'émissivité infrarouge par exemple.

La nébulosité sur un site est définie dans ce document comme la nébulosité d'une fraction du ciel située au-dessus dudit site. Il existe actuellement quatre grands types d'outils pour la prévoir :
- Les modèles numériques fondés sur des équations physiques, généralement utilisés pour une prévision à plusieurs jours ;
- Les analyses d'images satellitaires, pour un horizon temporel de prévision (nommé horizon temporel par la suite) pouvant atteindre plusieurs heures ;
- Les traitements statistiques d'historiques de données pouvant être relatives à la nébulosité, pour un horizon temporel allant jusqu'à une heure ;
- Les analyses d'images du ciel issues d'imageurs au sol pour une prévision à quelques minutes d'horizon temporel.

La prévision par analyse d'images satellitaires est caractérisée par les deux étapes suivantes :
- Conversion des images prises par satellite en nébulosité afin d'obtenir des cartographies de nébulosité (nommées cartographies par la suite), c'est-à-dire des valeurs de nébulosité et leur position géographique, selon des considérations pouvant être physiques et historiques ;
- Étude du déplacement des masses nuageuses ou valeurs de nébulosité entre plusieurs images ou cartographies successives (cette étude est nommée analyse spatiale dans ce document), et estimation de la position des valeurs ou masses nuageuses à un instant postérieur.

Les deux étapes précitées peuvent être effectuées selon un ordre variant d'une méthode à l'autre : il peut être choisi d'effectuer la conversion des images acquises par satellite avant ou après l'analyse spatiale. De telles méthodes d'analyse d'images satellitaires, dont l'une d'entre elles est présentée dans le document FR3019408A1, présentent l'avantage de traiter une grande quantité de données issue d'un recouvrement spatial des images satellitaires conséquent, mais elles perdent en précision lors de l'étape d'estimation de la nébulosité à partir des images prises par satellite. Elles s'appuient en outre sur un historique de données limité dans le temps afin de ne pas intégrer un nombre excessif d'entrées dans leurs calculs, elles sont donc davantage sensibles aux éventuelles données aberrantes issues d'images pouvant parfois présenter des défauts, en comparaison aux méthodes fondées sur des historiques de données contenant plus d'instants de mesure de la nébulosité.

La prévision issue d'un traitement statistique de données est quant à elle plus robuste et moins sensible aux données aberrantes dans la mesure où elle établit un modèle statistique à partir d'une quantité importante de données tirées d'un historique. On définit dans ce document la robustesse d'une estimation comme sa capacité à ne pas être trop affectée par une aberration dans les données d'entrée. Les méthodes de prévision par modélisation statistique sont composées d'au moins les deux étapes ordonnées suivantes :
- Ajustement des paramètres du modèle statistique en utilisant un historique de données d'entrée du modèle sur lesquelles ledit modèle est appliqué, et un historique de données de nébulosité effective : ces dernières sont comparées à la nébulosité estimée en sortie du modèle statistique afin de juger de la qualité de ce dernier. Une nébulosité effective est définie dans ce document comme une valeur de référence, elle peut être par exemple mesurée par des capteurs au sol ;
- Pour chaque prévision, réception des données nécessaires à l'application du modèle statistique (nommées données d'entrée par la suite) et application dudit modèle afin d'estimer la nébulosité à un instant postérieur aux instants correspondant aux données d'entrée.

Elles présentent toutefois des performances limitées par la faible quantité de données d'entrée à chaque instant de l'estimation, souvent restreintes à des données de mesure de nébulosité effective sur le site (PO). Par ailleurs, les données d'entrée sont rarement sélectionnées à chaque application du modèle statistique mais plutôt définies au moment de l'ajustement dudit modèle, ce qui peut causer, dans certaines circonstances, une inaptitude des données d'entrée à estimer la nébulosité.

L'invention améliore la situation actuelle dans la mesure où elle permet de remédier aux inconvénients précités. Hammer et AL: "Short-term forecasting of solar radiation: a statistical approach using satellite data", Marquez et AL: "Hybrid solar forecasting method uses satellite imaging and ground telemetry as inputs to ANNs" et Dambreville et AL: "Very short term forecasting of the Global Horizontal Irradiance through Helioclim maps" sont considérés part de l'état de la technique.

### Exposé de l'invention

L'invention est définie par les revendications.

L'objet de l'invention est la mise en place d'un procédé et d'un dispositif de prévision de la nébulosité sur un site (PO) utilisant une combinaison des outils de traitement d'images satellitaires et de modélisation statistique afin de remédier aux problèmes liés à chacun des outils. Ledit procédé contient au moins les étapes ordonnées suivantes :
a) Récupération (11) de données cartographiques de nébulosité acquises par satellite et relatives à une région géographique d'étude (RE) contenant le site (PO) pour n instants, avec n entier strictement supérieur à 1 ({T1,...,Tn} suite d'instants) ;
b) Comparaison (12) des données cartographiques récupérées à l'étape a) d'un premier instant (Tp) et d'un second instant (Tq) (p et q ont des valeurs comprises entre 1 et n), (Tp) étant postérieur à (Tq) ;
c) Détermination (13) d'un déplacement (X) des positions des valeurs de nébulosité entre (Tq) et (Tp) ;
d) Délimitation (14) d'une région géographique d'intérêt (RI) contenant au moins une valeur de nébulosité et relative à (X) ;
e) Récupération (15) de données de nébulosité (DAT_SELEC) relatives à celles contenues dans RI, pour au moins l'un des n instants {T1,...,Tn} ;
f) Estimation (16) de la nébulosité sur (PO) à un instant (TH) postérieur aux instants {T1,...,Tn}, par l'application d'un modèle linéaire généralisé (MOD_G) sur les données de nébulosité (DAT_SELEC) récupérées à l'étape e).

Les avantages de ce procédé par rapport à la solution existante décrite dans le document FR3019408A1 sont l'utilisation d'un historique de données comprenant n instants ({T1,...,Tn}, n>1) et l'application d'un modèle linéaire généralisé (MOD_G), ces deux caractéristiques conférant au résultat une sensibilité moins accrue aux erreurs éventuelles dans les données de nébulosité dans la mesure où ces données sont récupérées sur un historique comprenant potentiellement plus d'instants et sont traitées par un modèle statistique qui peut favoriser la robustesse des estimations.

Les avantages de ce procédé par rapport aux solutions existantes de traitement statistique de données et d'estimation par modélisation est la sélection des données d'entrée à chaque nouvelle prévision, ces données étant celles contenues dans la (RI) délimitée grâce aux étapes d'analyse spatiale b) à d) du procédé. Ainsi, des données potentiellement plus adaptées pour la détermination de la valeur de la nébulosité sur (PO) à l'instant (TH) sont prises comme entrées.

La région d'étude (RE) peut être sélectionnée en prenant en compte les caractéristiques de vent autour du site de mesure, afin d'extraire les données susceptibles d'être adaptées à l'estimation de la nébulosité à l'instant de prévision (TH). On peut par exemple effectuer une étude préalable des caractéristiques de vent autour de (PO) afin de déterminer quel recouvrement spatial peut englober les localisations sur lesquelles les valeurs de nébulosité sont susceptibles d'affecter celles correspondant à (PO) à l'instant (TH).

L'analyse spatiale effectuée aux étapes b) (12) à d) (14) du procédé peut être réalisée en appliquant un algorithme de « Block Matching » défini selon un certain mode de réalisation par les étapes suivantes :
- Définition à l'étape b) de blocs contenant plusieurs valeurs de nébulosité et centrés sur des localisations de valeurs situées à l'intérieur d'une région de recherche (RR) ;
- Comparaison à l'étape b) des blocs à l'instant (Tp) et à l'instant (Tq), en utilisant par exemple un critère d'écart entre les valeurs contenues dans chaque bloc ;
- Détermination à l'étape c) des déplacements de certains blocs en repérant pour chacun de ces blocs à l'instant (Tq) le bloc le plus proche à l'instant (Tp) selon le critère de l'étape précédente ;
- Détermination à l'étape c) du déplacement (X) en effectuant la moyenne des déplacements déterminés à l'étape précédente ;
- Détermination à l'étape d) de la localisation (M) de la valeur de nébulosité à (Tq) qui se situe sur (PO) à (Tp) lorsqu'un déplacement (X) est appliqué sur les données cartographiques à l'instant (Tq).
- Délimitation à l'étape d) d'une région d'intérêt (RI) centrée sur la donnée centrée en (M).

Selon ce mode de réalisation, (RR) peut par exemple être déterminée en fonction de l'horizon temporel et des caractéristiques de vent de la zone géographique, afin qu'elle englobe les localisations des valeurs susceptibles d'affecter la nébulosité sur (PO) à l'instant (TH) tout en conservant un nombre raisonnable de données afin d'éviter une compilation trop lente de l'étape b).

Par ailleurs, (Tq), (Tp) et (TH) peuvent être avantageusement trois instants successifs. Ce mode de réalisation permet de limiter les écarts temporels entre deux cartographies et ainsi diminuer les risques de modification du déplacement des données cartographiques entre deux instants.

En outre, le déplacement (X) peut être une moyenne des déplacements des blocs les plus proches de (PO) à l'instant (Tp).

Toujours selon ce mode de réalisation, la région d'intérêt (RI) peut être délimitée relativement à l'horizon temporel choisi. Ainsi, l'incertitude dans la prévision de la nébulosité, souvent croissante relativement à l'horizon temporel, sera en partie compensée par une augmentation de la taille de la région contenant les données d'entrée du modèle statistique, cette augmentation engendrant une augmentation de la robustesse de l'estimation.

Selon un mode de réalisation particulier, les données de nébulosité contenues dans (RI) aux n instants {T1,....,Tn} peuvent être récupérées dans la base de données (DAT_SELEC). On peut également agréger les données contenues dans (RI) afin d'obtenir un nombre limité de données à intégrer dans (DAT_SELEC), en divisant la (RI) en un certain nombre de parties et en utilisant la valeur moyenne de chaque partie comme donnée récupérée dans (DAT_SELEC).

On peut avantageusement ajouter en entrées du modèle linéaire généralisé (MOD_G) des données de nébulosité effective issues de mesures au sol (DAT_SOL). Ces mesures peuvent par exemple être issues de capteurs placés au sol, communicants et autonomes. L'intérêt majeur de l'ajout de (DAT_SOL) est qu'il limite l'erreur liée à la conversion des images prises par satellite en cartographies de nébulosité.

Les données de mesure au sol peuvent par ailleurs être avantageusement situées à la localisation du site (PO). Ainsi, les valeurs de nébulosité issues des mesures au sol seront susceptibles d'être plus adaptées à la prévision de la nébulosité sur (PO).

Selon un mode de réalisation particulier, le modèle linéaire généralisé (MOD_G) est une régression linéaire dont les variables explicatives sont les entrées de (MOD_G).

Selon un mode de réalisation particulier, le modèle linéaire généralisé (MOD_G) est ajusté sur une base d'entraînement composée d'une base (V_DAT) contenant au moins une donnée de nébulosité effective et d'une base (C_DAT) contenant les données d'entrée nécessaires à l'application de (MOD_G) pour estimer les valeurs correspondant à (V_DAT). La base d'entraînement est avantageusement composée d'une quantité de données permettant d'estimer la nébulosité pour un nombre important d'instants, afin de rendre (MOD_G) plus robuste. Pour éviter les effets de saisonnalité, il est par ailleurs avantageux d'ajuster (MOD_G) sur des instants répartis sur une année complète.

L'ajustement de (MOD_G) peut être effectué de la manière suivante :
- Réception des données de nébulosité effective (V_DAT) et des données d'entrée (C_DAT) nécessaires à l'application de (MOD_G) pour estimer les valeurs de nébulosité correspondant à (V_DAT) ;
- Ajustement de (MOD_G) sur les données (C_DAT), en utilisant les données (V_DAT) comme référence. L'ajustement peut être fait suivant des méthodes différentes selon le modèle statistique choisi, par exemple suivant une méthode des moindres carrés pour une régression linéaire.

Selon un mode de réalisation particulier, la nébulosité estimée à l'issue de l'étape f) peut être modifiée (32) par transformation linéaire (T_LIN). Une telle transformation linéaire peut permettre de réajuster la valeur estimée afin qu'elle se rapproche davantage de la valeur de nébulosité effective. (T_LIN) peut par exemple être ajusté en effectuant une régression linéaire entre un certain nombre de données estimées par (MOD_G) et les valeurs correspondantes de nébulosité effective. Elle s'appuie alors sur une base d'entraînement.

Selon un mode de réalisation particulier, la nébulosité estimée à l'issue de l'étape f) peut être convertie en rayonnement solaire (33) à l'aide d'un modèle (CS_MOD) qui détermine le rayonnement solaire correspondant en cas de ciel clair. Les valeurs de rayonnement en cas de ciel clair peuvent être calculées à l'aide de modèles utilisant des considérations physiques et historiques, tels que le modèle McClear. Ainsi, le résultat final du procédé de prévision pourra être directement lié à la production d'électricité correspondante des systèmes de conversion.

Selon un mode de réalisation particulier, les données satellitaires de nébulosité sont modifiées à l'étape a) selon une transformation linéaire (T_LIN2) (31) ajustée à partir d'au moins une donnée de nébulosité effective. Par exemple, (T_LIN2) peut être ajustée par régression polynomiale entre des valeurs de nébulosité estimées par satellite sur la localisation de (PO) et les valeurs correspondantes de nébulosité effective mesurée au sol. Ces mesures au sol peuvent par exemple être issues de capteurs au sol low cost communicants et autonomes. L'avantage principal de la transformation linéaire (T_LIN2) est de limiter l'erreur des données satellitaires de nébulosité due à la conversion des images satellitaires en nébulosité, grâce à un ajustement faisant intervenir des données de nébulosité effective.

Un autre aspect de l'invention est un produit programme informatique qui rassemble des instructions pour l'application du procédé de prévision décrit dans ce document. Ce programme peut être un code source ou compilé, et peut être écrit selon n'importe quel langage de programmation.

Un autre aspect de l'invention est un dispositif de prévision de la nébulosité composé d'au moins une interface d'entrée capable de recevoir au minimum les données satellitaires de nébulosité, d'une mémoire permettant le stockage desdites données, et d'une unité de traitement capable d'appliquer le produit programme informatique cité précédemment.

Avantageusement, l'interface d'entrée peut être capable de recevoir également des données de nébulosité effective, comme par exemple celles issues d'un capteur au sol low cost communicant et autonome. En outre, la mémoire peut avantageusement permettre de stocker lesdites données de nébulosité effective.

Selon un mode de réalisation avantageux, le dispositif de prévision de la nébulosité peut comporter une interface utilisateur composée d'au moins un écran, pouvant par exemple permettre à l'utilisateur de modifier des paramètres de prévision tels que les paramètres de (MOD_G), ou de visualiser des prévisions de nébulosité issues du procédé de prévision décrit dans ce document.

### Brève présentation des figures

L'invention sera décrite plus en détail en référence aux dessins annexés dans lesquels :
- La figure 1 illustre un organigramme indiquant les étapes minimales du procédé de prévision ;
- La figure 2 illustre un organigramme précisant un exemple d'ajustement du modèle linéaire généralisé (MOD_G) ;
- La figure 3 illustre un organigramme qui présente un exemple de mode de réalisation du procédé de prévision.

### Description détaillée des figures

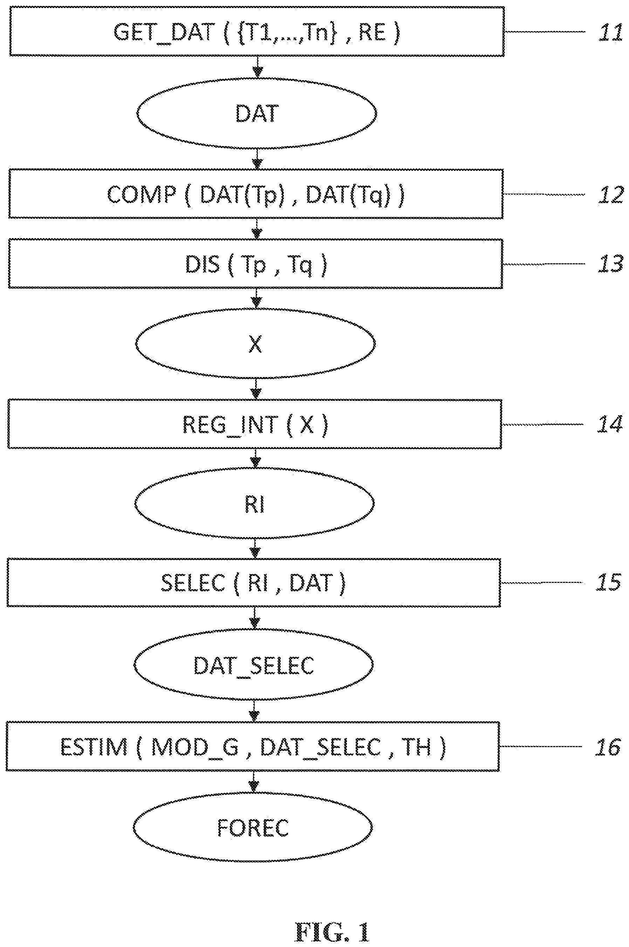

La figure 1 illustre les étapes minimales du procédé de prévision de la nébulosité. L'étape 11 (GET_DAT) correspondant à l'étape a) du procédé est une extraction des données satellitaires de nébulosité aux instants (T1) à (Tn), n étant un entier strictement supérieur à 1. Ces données cartographiques sont délimitées par une région d'étude (RE) contenant la localisation géographique de la station (PO). Typiquement, de telles données cartographiques peuvent être issues d'une étape antérieure de conversion des images acquises par satellite en valeurs de nébulosité pour chaque pixel de l'image. On compare ensuite, à l'étape 12 correspondant à l'étape b) du procédé, les données extraites à deux instants Tp et Tq, Tp étant postérieur à Tq. La comparaison (COMP) peut s'effectuer en utilisant un algorithme de « Block Matching ». Elle aboutit à la détermination d'un déplacement (X) effectuée à l'étape 13 correspondant à l'étape c) du procédé. Cette détermination du déplacement (DIS) peut être réalisée en utilisant la comparaison de l'étape 12, par exemple en définissant (X) comme la moyenne pondérée d'un certain nombre de déplacements de valeurs de nébulosité entre (Tq) et (Tp), ces déplacements pouvant être déterminés à partir de l'algorithme de « Block Matching ». Lors de l'étape 14 correspondant à l'étape d) du procédé, une région d'intérêt (RI) est déterminée relativement au déplacement (X). Ladite détermination (REG_INT) est typiquement effectuée en appliquant un déplacement inverse de (X) à partir de (PO), et en sélectionnant une région centrée sur la position trouvée ainsi. L'étape 15, correspondant à l'étape e) du procédé, est une sélection des données d'entrée du modèle linéaire généralisé (MOD_G). Cette sélection est réalisée relativement à la région d'intérêt (RI) définie à l'étape précédente. Les données sélectionnées (DAT_SELEC) peuvent par exemple être les données situées à l'intérieur de (RI) et extraites des cartographies des instants (T1) à (Tn). L'étape 16, correspondant à l'étape f) du procédé, est l'estimation de la nébulosité (FOREC) caractérisée par l'application du modèle linéaire généralisé (MOD_G) sur le jeu de données (DAT_SELEC), pour l'instant de prévision (TH).

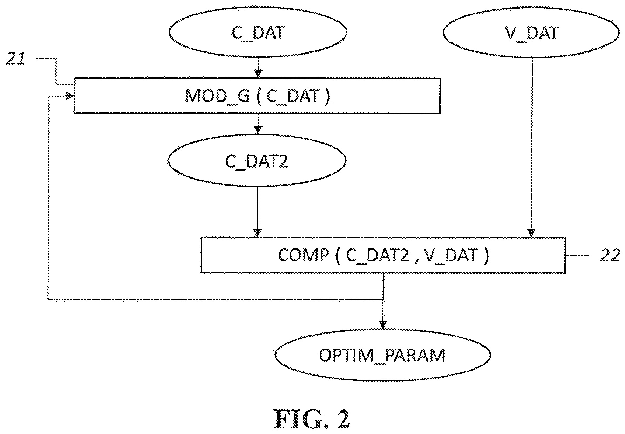

La figure 2 est un exemple de réalisation de l'ajustement du modèle linéaire généralisé. On utilise une base de données de nébulosité effective (V_DAT) et une base de données d'entrée (C_DAT) de (MOD_G) permettant l'estimation en sortie des données de nébulosité de (V_DAT). Les paramètres de (MOD_G), qui peuvent être par exemple les coefficients et l'ordre d'une régression linéaire, sont alors optimisés de la manière suivante : on applique (MOD_G) sur les données (C_DAT), on compare les résultats en sortie (C_DAT2) aux valeurs de nébulosité effective (V_DAT), en utilisant par exemple un calcul du carré des résidus comme estimateur de performance, et on modifie les paramètres de manière à obtenir finalement une meilleure valeur de l'estimateur de performance. Lorsque la valeur de l'estimateur ne peut plus être améliorée, on extrait les paramètres de (MOD_G) qui sont considérés comme les paramètres optimaux (OPTIM_PARAM).

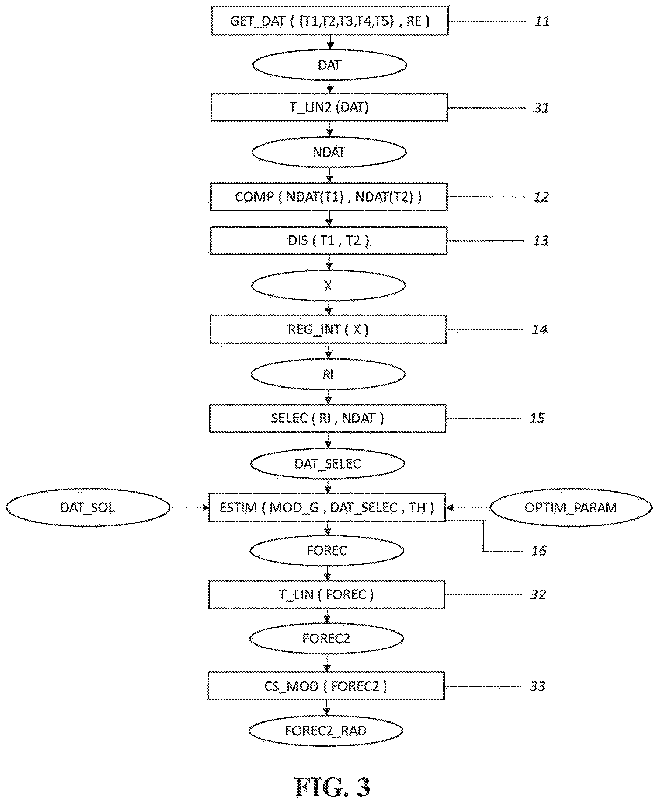

La figure 3 représente un organigramme détaillant les étapes d'un mode de réalisation du procédé de prévision de la nébulosité. L'étape 11 d'extraction des données satellitaires de nébulosité peut extraire les données cartographiques de cinq instants consécutifs (T1) à (T5), ces cartographies pouvant être elles-mêmes délimitées par une région d'étude (RE) de forme carrée centrée sur (PO). On peut alors réaliser selon l'étape 31 un ajustement des données satellitaires (DAT) en leur appliquant une transformation linéaire (T_LIN2). Cette transformation peut être de type polynomial, dont les paramètres ont été calculés en utilisant un jeu de données satellitaires de nébulosité au-dessus de (PO) et les valeurs de nébulosité effective correspondantes, et en minimisant l'erreur entre les données satellitaires après application de (T_LIN2) et les données de nébulosité effective correspondantes. À l'issue de cette transformation éventuelle, on obtient une base de données satellitaires (NDAT). On peut ensuite comparer les données cartographiques de (T1) et celles de (T2) lors de l'étape 12, cette comparaison s'effectuant avantageusement selon un algorithme de « Block Matching » qui détermine ainsi le déplacement de certaines données cartographiques entre les instants (T2) et (T1). Le déplacement (X) entre (T2) et (T1) selon l'étape 13 peut alors être défini comme une moyenne de déplacements de certaines données cartographiques, comme par exemple les données cartographiques adjacentes à la localisation de (PO). L'étape 14 de sélection de la région d'intérêt est avantageusement séparée en deux sous-étapes :
- Détermination de la position de la donnée située en amont de (PO) selon le déplacement (X), réalisée en retranchant le déplacement (X) à la position (PO) ;
- Délimitation de la (RI) centrée sur la donnée déterminée à la sous-étape précédente : la (RI) peut par exemple être de forme carrée, et sa largeur peut être définie en fonction de l'horizon temporel, afin qu'elle contienne plus de données lorsque l'horizon temporel s'agrandit.

Lors de l'étape 15, il s'agit de sélectionner les données d'entrée de (MOD_G) relatives à (RI) et aux données cartographiques (NDAT). On peut par exemple récupérer les valeurs de nébulosité des instants (T1) à (T5) contenues dans (RI) pour former (DAT_SELEC). Si la quantité de données situées dans (RI) est considérée trop importante, on peut agréger les valeurs entre elles, par exemple de la manière suivante : on divise (RI) en neuf groupes, et l'on calcule la moyenne de nébulosité dans chacun des groupes. On peut ainsi limiter le nombre de données à neuf par cartographie. On peut en outre pondérer la moyenne afin de donner plus d'importance aux données proches de (PO) par exemple. L'étape 16 est caractérisée par l'application du modèle linéaire généralisé (MOD_G) sur les données d'entrée afin d'estimer en sortie du modèle la nébulosité sur (PO) à un instant (TH) postérieur aux instants (T1) à (T5). (MOD_G) peut être une régression linéaire, dont les coefficients et l'ordre sont évalués en ajustant (MOD_G) sur une base d'entraînement composée de données de nébulosité effective (V_DAT) et de données (C_DAT) permettant l'estimation par (MOD_G) des données contenues dans (V_DAT). Ladite base d'entraînement peut avantageusement contenir des données de nébulosité s'étalant sur une année complète, afin d'éviter les effets de saisonnalité. Cet entraînement permet alors la détermination des paramètres considérés comme optimaux (OPTIM_PARAM) pour la prévision. Ces paramètres peuvent être considérés comme identiques à tous les instants sur un site fixé : le calcul de (OPTIM_PARAM) peut ainsi être réalisé une seule fois pour chaque site. (MOD_G) peut en outre prendre comme données d'entrée supplémentaires les données de nébulosité effective entre (T1) et (T5). Lesdites données de nébulosité effective peuvent être issues de mesures réalisées par des capteurs au sol low cost communicants et autonomes, situés par exemple sur le site (PO). Une fois l'estimation de la nébulosité (FOREC) à l'instant (TH) effectuée, on peut appliquer une transformation linéaire (T_LIN) au résultat selon l'étape 32. Cette transformation linéaire peut être une régression linéaire dont les coefficients ont été calculés à l'aide d'une base d'entraînement contenant des résultats de l'estimation issus de l'étape 16 et les valeurs de nébulosité effective correspondante. Ladite base d'entraînement peut avantageusement contenir des données de nébulosité s'étalant sur une année complète, afin d'éviter les effets de saisonnalité. L'étape 32 permet d'éviter les biais potentiels dans les résultats issus de (MOD_G). L'estimation (FOREC2) transformée par (T_LIN) peut également être convertie en rayonnement solaire selon l'étape 33 afin que la valeur à l'issue du procédé soit directement liée à la production de systèmes de conversion utilisant ledit procédé. La conversion de la nébulosité en rayonnement solaire peut s'effectuer en utilisant des modèles de ciel clair tels que le modèle McClear, qui évaluent en fonction de considérations physiques et historiques le rayonnement solaire en une localisation lorsque le ciel est dépourvu de masses nuageuses.

Dans le paragraphe précédent, le procédé de prévision présenté est un exemple de mode de réalisation du procédé global dont ce document est l'objet. Ledit procédé global ne se limite donc pas à cet exemple de réalisation et inclut d'autres modes particuliers comme par exemple l'utilisation de modèles ARMA à l'étape f) du procédé en tant que modèle statistique.

## Revendications

1. Procédé pour prévoir la nébulosité sur une localisation géographique définie (PO), **caractérisé en ce qu'**il est composé au minimum des étapes suivantes :
a) Récupération (11) de données cartographiques de nébulosité (valeur et position géographique) acquises par satellite et relatives à une région géographique d'étude (RE) contenant la localisation (PO) pour n instants, avec n entier strictement supérieur à 1 ({T1,...,Tn} suite d'instants) ;
b) Comparaison (12) des données cartographiques récupérées à l'étape a) d'un premier instant (Tp) et d'un second instant (Tq) (p et q ont des valeurs comprises entre 1 et n), le premier instant (Tp) étant postérieur au second instant (Tq) ;
c) Détermination (13) d'un déplacement (X) des positions des valeurs de nébulosité entre le second instant (Tq) et le premier instant (Tp) ;
d) Délimitation (14) d'une région géographique d'intérêt (RI) contenant au moins une valeur de nébulosité et relative au déplacement (X) déterminé à l'étape c) ;
e) Récupération (15) de données de nébulosité (DAT_SELEC) relatives à celles contenues dans la région géographique d'intérêt (RI) pour au moins l'un des n instants ({T1,...,Tn} suite d'instants) ;
f) Estimation (16) de la nébulosité sur la localisation (PO) à un instant (TH) postérieur aux n instants ({T1,...,Tn} suite d'instants) par application d'un modèle linéaire généralisé (MOD_G) utilisant les données de nébulosité (DAT_SELEC) récupérées à l'étape e) ;
**en ce que** des données de nébulosité effective sont également récupérées pour les n instants ({T1,...,Tn} suite décroissante, n>1), et à l'étape f), le modèle linéaire généralisé (MOD_G) utilise ces données en entrées supplémentaires ;
**en ce que** le modèle linéaire généralisé (MOD_G) appliqué à l'étape f) est une régression linéaire dont les variables explicatives sont les entrées du modèle ;
et **en ce que** le modèle linéaire généralisé (MOD_G) est ajusté sur une base d'entraînement composée d'une base (V_DAT) contenant au moins une donnée de nébulosité effective et d'une base de données d'entrée (C_DAT) nécessaires à l'application de l'étape f) pour estimer la nébulosité aux instants correspondant à la base (V_DAT) de données de nébulosité effective.

2. Procédé selon la revendication 1, **caractérisé en ce que** les données de nébulosité sont déterminées à partir d'un appareil de mesure situé à la localisation de (PO).

3. Procédé selon l'une des revendications précédentes, **caractérisé en ce que** la nébulosité estimée à l'étape f) est modifiée par transformation linéaire (T_LIN) (32).

4. Procédé selon l'une des revendications précédentes, **caractérisé en ce que** à l'issue de l'étape f), chaque estimation de nébulosité est convertie en valeur de rayonnement solaire à l'aide d'un modèle qui détermine les valeurs de rayonnement solaire correspondant à un ciel clair (33).

5. Procédé selon l'une des revendications précédentes, **caractérisé en ce que** les données satellitaires de nébulosité sont modifiées selon une transformation linéaire (T_LIN2) calibrée à partir d'au moins une donnée de nébulosité effective (31).

6. Produit programme d'ordinateur comprenant des instructions de code de programme pour l'exécution des étapes du procédé selon l'une des revendications précédentes, lorsque ledit programme est exécuté sur un ordinateur.

7. Dispositif composé d'au moins une interface d'entrée capable de recevoir au minimum les données satellitaires de nébulosité, d'une mémoire permettant de stocker au minimum ces données, et d'une unité de traitement capable d'appliquer le produit programme d'ordinateur selon la revendication 6.

## Patentansprüche

1. Verfahren zur Vorhersage der Bewölkung an einer definierten geographischen Lokalisierung (P0), **dadurch gekennzeichnet, dass** es zumindest aus den folgenden Schritten besteht:
a) Abrufen (11) von Kartographiedaten der Bewölkung (Wert und geographische Position), die mittels Satellit erfasst wurden und auf eine geographische Studienregion (RE) bezogen sind, die Lokalisierung (P0) für n Zeitpunkte enthaltend, wobei n eine Ganzzahl größer als 1 ist ({T1,...,Tn} Folge von Zeitpunkten);
b) Gegenüberstellung (12) der in Schritt a) eines ersten Zeitpunkts (Tp) und eines zweiten Zeitpunkts (Tq) abgerufenen Kartographiedaten (p und q haben Werte zwischen 1 und n), wobei der erste Zeitpunkt (Tp) hinter dem zweiten Zeitpunkt (Tq) liegt;
c) Ermittlung (13) einer Verschiebung (X) der Positionen der Bewölkungswerte zwischen dem zweiten Zeitpunkt (Tq) und dem ersten Zeitpunkt (Tp);
d) Abgrenzung (14) einer geographischen Interessenregion (RI), die mindestens einen Bewölkungswert enthält und sich auf die in Schritt c) ermittelte Verschiebung (X) beziehend;
e) Abrufen (15) von Bewölkungsdaten (DAT_SELEC), die sich auf diejenigen beziehen, die in der geographischen Interessenregion (RI) für mindestens einen der n Zeitpunkte ({T1,...,Tn} Folge von Zeitpunkten) enthalten sind;
f) Schätzung (16) der Bewölkung an der Lokalisierung (P0) zu einem Zeitpunkt (TH) hinter den n Zeitpunkten ({T1,...,Tn} Folge von Zeitpunkten) durch Anwendung eines verallgemeinerten linearen Modells (MOD_G) unter Verwendung der Bewölkungsdaten (DAT_SELEC), die in Schritt e) abgerufen wurden;
dass auch Daten der effektiven Bewölkung für die n Zeitpunkte ({T1,...,Tn} abfallende Folge, n>1) abgerufen werden, und in Schritt f), wobei das verallgemeinerte lineare Modell (MOD_G) diese Daten als zusätzliche Eingaben verwendet;
dass das verallgemeinerte lineare Modell (MOD_G), das in Schritt f) angewendet wird, eine lineare Regression ist, deren erklärende Variablen die Eingaben des Modells sind; und dass das verallgemeinerte lineare Modell (MOD_G) auf einer Übungsbasis eingestellt ist, die aus einer Basis (V_DAT) besteht, die mindestens einen Datenwert der effektiven Bewölkung enthält, und einer Basis von Eingabedaten (C_DAT), die erforderlich sind, um Schritt f) anzuwenden, um die Bewölkung zu den Zeitpunkten zu schätzen, die der Basis von Daten (V_DAT) der effektiven Bewölkung entsprechen.

2. Verfahren nach Anspruch 1, **dadurch gekennzeichnet, dass** die Bewölkungsdaten von einem Messgerät ermittelt werden, das an der Lokalisierung (P0) angeordnet ist.

3. Verfahren nach einem der vorhergehenden Ansprüche, **dadurch gekennzeichnet, dass** die in Schritt f) geschätzte Bewölkung durch lineare Transformation (T_LIN) (32) modifiziert ist.

4. Verfahren nach einem der vorhergehenden Ansprüche, **dadurch gekennzeichnet, dass** am Ende von Schritt f) jede Bewölkungsschätzung in einen Sonnenstrahlungswert umgewandelt wird mithilfe eines Modells, das die Sonnenstrahlungswerte ermittelt, die einem klaren Himmel (33) entsprechen.

5. Verfahren nach einem der vorhergehenden Ansprüche, **dadurch gekennzeichnet, dass** die Satellitendaten der Bewölkung durch eine lineare Transformation (T_LIN2) modifiziert werden, die von mindestens einem Datenwert der effektiven Bewölkung (31) kalibriert ist.

6. Computerprogrammprodukt, Anweisungen von Programmcode zur Ausführung der Verfahrensschritte nach einem der vorhergehenden Ansprüche umfassend, wenn das Programm auf einem Computer ausgeführt wird.

7. Vorrichtung, aus mindestens einer Eingabeschnittstelle bestehend, die in der Lage ist, zumindest die Satellitendaten der Bewölkung zu empfangen, einem Speicher, der zumindest die Speicherung dieser Daten ermöglicht, und einer Verarbeitungseinheit, die in der Lage ist, das Computerprogrammprodukt nach Anspruch 6 anzuwenden.

## Claims

1. A method for forecasting cloudiness on a defined geographic location (P0), **characterised in that** it consists at the least of the following steps:
a) recovering (11) cloudiness mapping data (value and geographic position) acquired by satellite and relating to a geographic study region (RE) containing the location (P0) for n times, with n being an integer strictly greater than 1 ({T1, ..., Tn} series of times);
b) comparing (12) the geographic data recovered in step a) of a first time (Tp) and a second time (Tq) (p and q have values of between 1 and n), the first time (Tp) being subsequent to the second time (Tq);
c) determining (13) a shift (X) in the positions of the cloudiness values between the second time (Tq) and the first time (Tp);
d) delimiting (14) a geographic region of interest (RI) containing at least one cloudiness value and relating to the shift (X) determined in step (c);
e) recovering (15) cloudiness data (DAT_SELEC) relating to those contained in the geographic region of interest (RI) for at least one of the n times ({T1, ..., Tn} series of times);
f) estimating (16) the cloudiness on the location (P0) at a time (TH) subsequent to the n times ({T1, ..., Tn} series of times) by applying a generalised linear model (MOD_G) using the cloudiness data (DAT_SELECT) recovered in step e) ;
and **in that** effective cloudiness data are also recovered for the n times ({T1, ..., Tn} decreasing series, n > 1), and in step f), the generalised linear model (MOD_G) uses these data as additional inputs;
**in that** the generalised linear model (MOD_G) applied in step f) is a linear regression the explanatory variables of which are the inputs of the model;
and **in that** the generalised linear model (MOD_G) is adjusted to a training base consisting of a base (V_DAT) containing at least one effective cloudiness piece of data and of an input data base (C_DAT) necessary for applying step f) to estimate cloudiness at the times corresponding to the effective cloudiness data base (V_DAT).

2. The method according to claim 1, **characterised in that** the cloudiness data are determined from a measurement apparatus located at the location of (PO).

3. The method according to one of the preceding claims, **characterised in that** the cloudiness estimated in step f) is modified by linear transformation (T_LIN) (32).

4. The method according to one of the preceding claims, **characterised in that** at the end of step f), each cloudiness estimation is converted into a solar radiation value using a model which determines solar radiation values corresponding to a clear sky (33).

5. The method according to one of the preceding claims, **characterised in that** the satellite cloudiness data are modified according to a linear transformation (T_LIN2) calibrated from at least one effective cloudiness piece of data (31).

6. A computer program product comprising program code instructions for carrying out the steps of the method according to one of the preceding claims, when said program is run on a computer.

7. A device consisting of at least one input interface capable of receiving at the least satellite cloudiness data, from a memory for storing at the least these data, and of a processing unit capable of applying the computer program product according to claim 6.
